# NEUE EUROPÄISCHE PATENTSCHRIFT

(11) **EP 1 532 858 B2**
(45) Veröffentlichungstag und Bekanntmachung des Hinweises auf die Entscheidung über den Einspruch: **22.06.2011**
(45) Hinweis auf die Patenterteilung: 25.04.2007
(21) Anmeldenummer: 04026795.7
(22) Anmeldetag: 11.11.2004
(51) Int. Cl.: A01F 12/40, A01D 75/28

(54) **Verfahren und Vorrichtung zum Zerkleinern und Verteilen von Erntegut**
Process and device for chopping and distributing harvested products
Procédé et dispositif pour le broyage et la distribution de produits de récolte

(30) Priorität: 21.11.2003 DE 10354783
(43) Veröffentlichungstag der Anmeldung: 25.05.2005
(73) Patentinhaber: CLAAS Selbstfahrende Erntemaschinen GmbH, 33428 Harsewinkel (DE)
(72) Erfinder: Brinkmann, Jörn, 33428 Harsewinkel (DE); Niermann, Martin, 33428 Harsewinkel (DE); Amsbeck, Dieter, 33428 Harsewinkel (DE); Nollmann, Jürgen, 33775 Versmold (DE)

(56) Entgegenhaltungen:
- EP-A- 0 537 621
- EP-A- 0 631 717
- EP-A- 1 277 387
- EP-A- 1 350 424
- DE-A- 3 438 609
- DE-C- 2 815 936
- DE-U- 7 828 441
- US-A- 4 548 214

## Beschreibung

Die Erfindung bezieht sich auf ein Verfahren und eine Vorrichtung zum Zerkleinem und Verteilen von Erntegut für einen Strohhäcksler und einen zugeordneten Gutverteiler an einem Mähdrescher nach dem Oberbegriff der Patentansprüche 1 und 2.

Mähdrescher mit der Strohtrenneinrichtung nachgeordneten Anbaustrohhäckslern sowie Häckselgut- und Spreuverteilern mit rotierenden Wurf- und Verteilelementen sind bereits in verschiedenen Ausführungen bekannt.

So ist beispielsweise in der EP 0 212 337 A1 ein Mähdrescher dargestellt, bei dem das von den Strohschüttlern fallende Stroh in einen Strohhäcksler gelangt, von diesem zerkleinert und anschließend das Häckselgut auf den Feldboden ausgeworfen wird. Die anfallende Spreu gelangt von den Sieben der Reinigungseinrichtung auf zwei nebeneinander angeordnete und gegenläufig angetriebene Rotoren, die das Gut verteilen. Die Rotoren sind an einem Tragrahmen gelagert, der entsprechend den jeweiligen Betriebsbedingungen verschiedene Höhen- und Längseinstellungen sowie in Fahrtrichtung unterschiedliche Schwenklagen der Rotoren ermöglicht. Der Ernteeinsatz dieser Häcksel- und Verteileinrichtung ist deshalb aufgrund ausreichender Einstellmöglichkeiten auf ebenen Flächen problemlos möglich. Beim Einsatz in Hanglagen treten damit jedoch erhebliche Nachteile auf, da das auf den Strohschüttlern befindliche Stroh quer zur Fahrtrichtung auf die hangabwärts gerichtete Seite verlagert wird und dort zu einer Guhanhäufung führt. Dementsprechend werden auch der Strohhäcksler und die Verteiteinrichtung ungleichmäßig beschickt. Dies führt zu einem erhöhten Leistungsbedarf und zu einer Verstopfungsgefahr sowie zu einer ungleichmäßigen Verteilung des Häckselgutes auf dem Feld.

EP-A-1350424 veröffentlicht einen Strohhäcksler mit nachgeordneter Verteileinrichtung, wobei dieser Verteileinrichtung Strohleitbleche zugeordnet sind, die in Abhängigkeit der Hangneigung änderbar sind.

Der Erfindung liegt deshalb die Aufgabe zugrunde, beim Emteeinsatz eines Mähdreschers in Hanglagen eine gleichmäßige Erntegutzufuhr zu einem Anbau-Strohhäcksler und zu einem zugehörigen Gutverteiler zu erreichten und das Häckselgut ebenfalls gleichmäßig auf dem Feldboden zu verteilen.

Erfindungsgemäß wird diese Aufgabe durch die in den Patentansprüchen 1 und 2 genannten Merkmale gelöst. Weitere vorteilhafte Ausführungen des Erfindungsgegenstandes ergeben sich aus den nachgeordneten Ansprüchen.

Die efindungsgemäße Lösung ermöglicht durch eine hangneigungsabhängige Lageänderung eines Strohhäckslers und des zugehörigen rotierenden Häckselgutverteilers eine gleichmäßige Stroh- bzw. Hackselgutzuführung auch in Hanglagen. Funktionelle Störungen und einseitige Verstopfungen durch eine überhöhte Gutzufuhr auf der hangabwärts gelegenen Seite werden vermieden. Des weiteren wird durch die hangneigungsabhängige Steuerung der Häckselgutverteiler eine weitgehend gleichmäßige Gutverteilung über die gesamte Schneidwerksbreite des Mähdreschers erzielt.

Eine konstruktive besonders einfache Ausführung ergibt sich dann, wenn dem Strohhäcksler und dem Gutverteiler eine im einfachsten Fall elektro-hydraulisch arbeitende Steuereinrichtung zugeordnet ist, die ein hangneigungsabhängiges Verstellen des Strohhacksters und/oder der Gutverbeiler zulässt, wobei Strohhäcksler und Gutverteiler entweder über eine gemeinsame oder getrennte Steuereinrichtungen verfügen.

Sollen der Strohhäcksler und die Gutverteiler stets nur gemeinsam an sich ändernde Bodenneigungen angepasst werden, werden der Strohhäcksler und die Gutverteiler im einfachsten Fall um eine gemeinsame in Fahrtrichtung weisende Schwenkachse drehbeweglich geführt. Dies hat den Vorteil, dass die Steuereinrichtung erheblich vereinfacht werden kann.

Die Neigung des Feldbodens kann in an sich bekannter Weise sehr einfach durch einen an sich bekannben und im Bereich der gemeinsamen Schwenkachse von Strohhäcksler und Gutverbeilern angeordneten Neigungssensor ermittelt und in Form eines Neigungssignals an eine Regelungseinrichtung zur Anpassung der Position des Strohhackslers und der ihm zugeordneten Gutverteiler an die Neigung des Feldbodens übergeben werden.

In vorteilhafter Weiterbildung der Erfindung können die Gutverteiler zudem um eine sich quer zur Fahrtrichtung erstreckende Schwenkachse lageveränderlich angeordnet sein, wobei ein Neigungssensor die Neigung der Gutverteiler in Längsrichtung des Mähdreschers erfasst und durch Druckbeaufschlagung oder Druckentlastung eines Hubzylinders die Längsneigung der Gutverteiler an die Neigung des Feldbodens anpasst.

Eine besonders einfache Anpassung der Gutverteiler an die Querneigung des Feldbodens wird dadurch erreicht, dass der oder die Gutverteiler quer zur Fahrtrichtung des Mähdreschers geradlinig in ihrer Position zum Strohhäcksler verstellbar angeordnet sind.

In vorteilhafter Weiterbildung der Erfindung kann der Hubzylinder entweder über eine sensorunterstützte separate Steuereinrichtung oder eine mit einer hangabhängigen Siebsteuerung der Reinigungssiebe des Mähdreschers in Verbindung stehenden Einrichtung betätigbar ist.

In einer weiteren vorteilhaften Ausgestaltung der Erfindung kann der Zwischenraum zwischen benachbarten Gutverteilern auch durch an sich bekannte verschwenkbare Leitprofile durchsetzt sein, deren Ausrichtung zu den Gutverteilern in Abhängigkeit von der Hangneigung änderbar ist. Dies hat den Vorteil, dass zu einer hangneigungsabhängigen Übergabe des Erntegutes vom Strohhäcksler an die Gutverteiler oder der hangneigungsabhängigen Verteilung des Erntegutes auf dem Feldboden nur wenige und zudem nicht aktiv angetriebene Arbeitsorgane in ihrer Position verändert werden müssen.

Um die Lage der Gutverteiler an die Neigung des Feldbodens auf einfache Weise anpassen zu können, sind entweder alle Gutverteiler des Mähdreschers in einem gemeinsamen Rahmen angeordnet, der um eine einzige in Fahrtrichtung weisende Achse verschwenkbar ist, wobei auf diese Weise zu Lasten der Genauigkeit der Hangneigungsanpassung eine kostengünstige konstruktive Ausführung erreicht wird. Andererseits können die Gutverteiler auch um separate, in Fahrtrichtung weisende Achsen verschwenkbar sein, sodass nunmehr eine genaure aber konstruktive aufwendigere Hangneigungsanpassung erreicht wird.

Weiter vorteilhafte Ausgestaltungen sind Gegenstand weiterer Unteransprüche, wobei die nachstehend erläuterten Ausführungsbeispiele nicht unter den Schutzbereich der Patentansprüche fallen.

In der zugehörigen Zeichnung zeigen:
- Fig. 1: eine Längsschnittdarstellung eines Mähdreschers mit einer Hangaus- gleichseinrichtung und einem Strohhäcksler mit einem zugeordneten Gutverteiler
- Fig. 2: die Draufsicht auf einen Mähdrescher mit einem Strohhäcksler und zwei quer zur Fahrtrichtung einstellbaren Gutverteilern
- Fig. 3: die Draufsicht auf einen Mähdrescher mit einem Strohhäcksler und ei- nem zwischen den Gutverteilern schwenkbar angeordneten Leitprofil
- Fig. 4: die Rückansicht eines Mähdreschers ohne Hangausgleichseinrichtung mit zwei in Querrichtung einstellbaren Gutverteilern
- Fig.5: die Rückansicht eines Mähdreschers mit Hangausgleichseinrichtung und zwei Gutverteilern, die um eine gemeinsame Achse schwenkbar sind
- Fig. 6: die Rückansicht eines Mähdreschers mit Hangausgteichseinrichtung und zwei Gutverteilern, die um jeweils eine Achse schwenkbar sind.

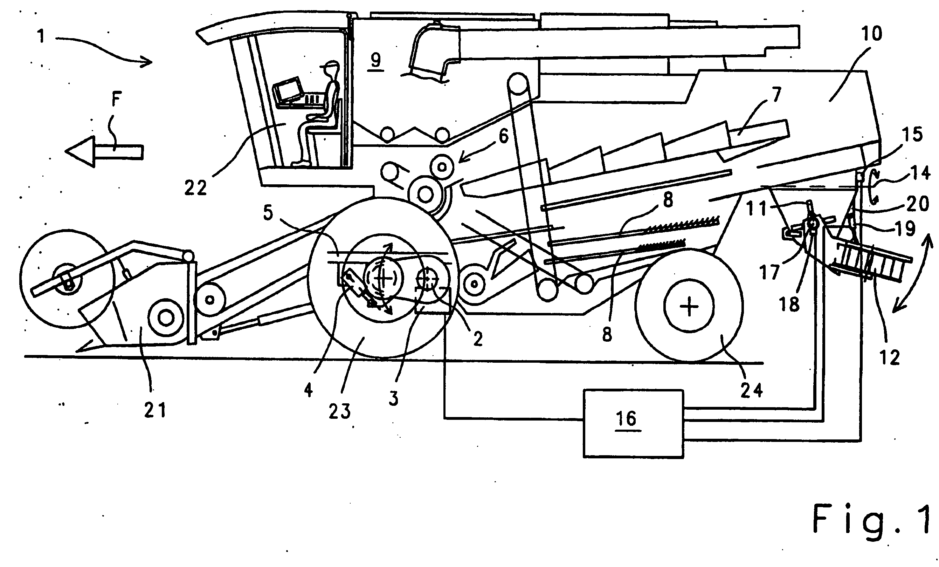

Bei einem in der Fig. 1 dargestellten Mähdrescher 1 mit einer Hangausgleichseinrichtung wird über entsprechende am Achsträger 2 angeordnete Sensoren 3 die jeweilige Hangneigung des Feldes in Längs- und Querrichtung erfasst. Durch deren Ausgangssignale werden Hydraulikzylinder 4 beaufschlagt, die die erforderliche Stellbewegung auf den Rahmen 5 des Mähdreschers 1 übertragen, so dass sich dessen Arbeitsorgane, wie beispielsweise die Drescheinrichtung 6, die Strohschüttler 7, die Reinigungssiebe 8 und der Korntank 9 stets in einer horizontalen Lage befinden. Der im Bereich der Strohausfallhaube 10 angeordnete Strohhäcksler 11 mit zugeordneten Gutverteilern 12,13 ist mit einer hangneigungsabhängigen elektro-hydraulischen Regelungseinrichtung versehen. Zu diesem Zweck sind der Strohhäcksler 11 und die Gutverteiler 12,13 um eine gemeinsame, in Fahrtrichtung F verlaufende Schwenkachse 14 entsprechend der jeweiligen Hangneigung schwenkbar. Die Erfassung der Hangneigung erfolgt über einen im Bereich der Schwenkachse 14 angeordneten Sensor 15, der die Stellsignale an eine Regelungseinrichtung 16 weiterleitet. Darüber hinaus ist im Bereich der quer zur Fahrrichtung F verlaufenden Schwenkachse 17 der Gutverteiler 12,13 ebenfalls ein Sensor 18 zur Erfassung der Neigung der Gutverteiler 12,13 zum Feldboden angebracht. Entsprechend dem Ausgangssignal des Sensors 18 erfolgt die Neigungseinstellung der Gutverteiler 12,13 über einen Hydraulikzylinder 19, der zwischen dem Rahmen 20 des Strohhäckslers 11 und den Gutverteilern 12,13 angeordnet ist. Durch diese Schwenkmöglichkeit der Gutverteiler 12,13 wird eine Erfassung des gesamten aus dem Strohhäcksler 11 geförderten Häckselgutes ermöglicht.

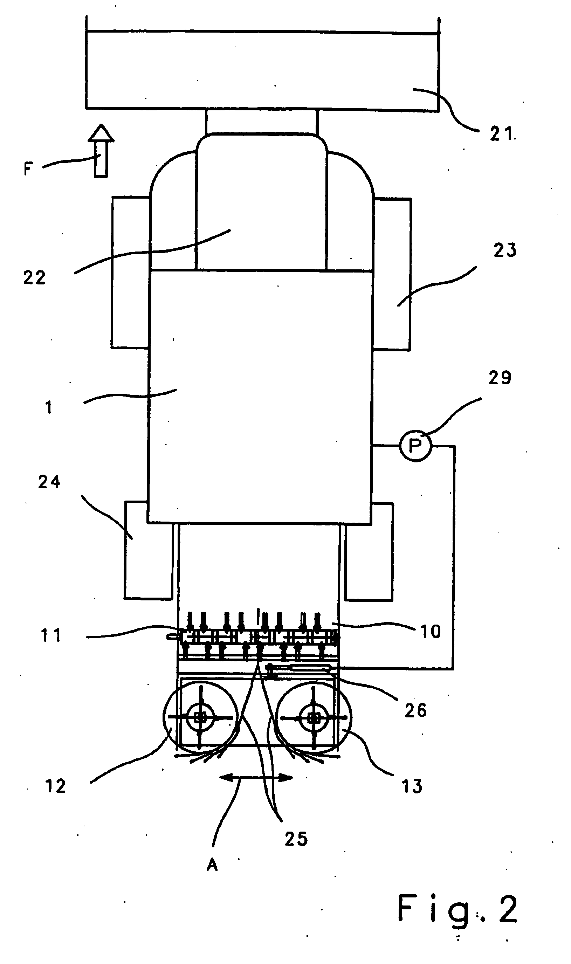

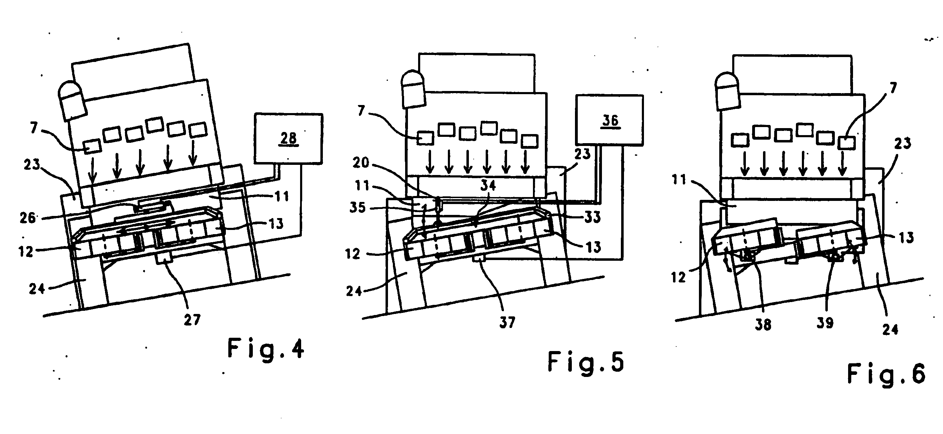

In der Fig. 2 ist ein Mähdrescher 1 ohne Hangausgleichseinrichtung mit Schneidwerk 21, Fahrerkabine 22, Vorderrädern 23 und Hinterrädern 24 in der Draufsicht und in der Fig. 4 in der Rückansicht dargestellt. Im rückwärtigen Bereich sind unterhalb der Strohausfallhaube 10 ein Strohhäcksler 11 und zugeordnete rotierende Gutverteiler 12,13 angeordnet. Zwischen beiden Gutverteilern 12,13 befindet sich ein Leitprofil 25. Da beim Emteeinsatz einer solchen Ausführung in Hanglagen der Strohhäcksler 11 ungleichmäßig von den Strohschüttlern 7 beschickt wird, ist dementsprechend auch die Häckselgutzufuhr zu den Gutverteilern 12,14 unterschiedlich groß und die daraus resultierende Häckselgutverteilung am Feldboden ebenso ungleichmäßig. Um diese negativen Auswirkungen zu verringern, sind die beiden Gutverteiler 12, 13 in Abhängigkeit von der Hangneigung quer zur Fahrtrichtung F gemäß Pfeilrichtung A geradlinig verstellbar angeordnet. Die Stellbewegung erfolgt durch einen Hydraulikzylinder 26, der über einen Sensor 27 und eine separate Steuerungseinrichtung 28 oder durch eine mit der hangseitigen Siebsteuerung 29 der Reinigungssiebe 8 in Verbindung stehenden Einrichtung betätigt wird.

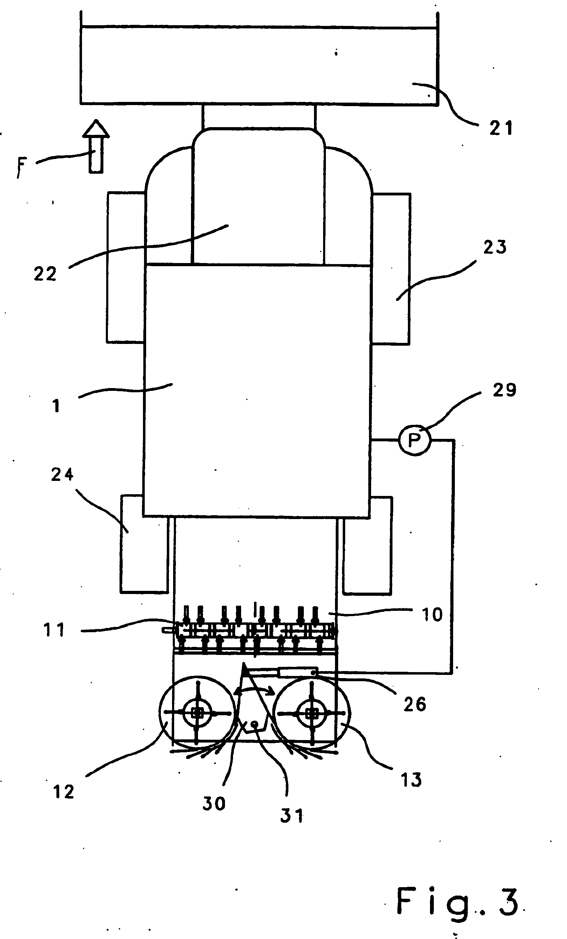

Nach einer anderen, in der Fig. 3 dargestellten Ausführung sind die beiden Gutverteiler 12,13 starr mit dem Rahmen 5 des Mähdreschers 1 verbunden. Die hangneigungsabhängige Steuerung der Zufuhr des vom Strohhäcksler 11 geförderten Häckselgutes zu den Gutverteiler 12,13 erfolgt über ein schwenkbares Leitprofil 30, das zwischen den beiden Gutverteilern 12,13 angeordnet ist und um eine vertikal verlaufende Achse 31 schwenkbar ist. Die Schwenkbewegung erfolgt über einen Hydraulikzylinder 32, der von der hangabhängigen Siebsteuerung 39 der Reinigungssiebe 8 oder von einer separaten neigungsabhängigen Stelleinrichtung betätigt wird. Durch die in den Fig. 2, 3 und 4 dargestellten verschiedenen Ausführungen wird eine gleichmäßige Verteilung des gehäckselten Strohs in Hanglagen erreicht.

In den Fig. 5 und 6 sind Mähdrescher 1 mit einer Hangausgleichseinrichtung dargestellt. Bei diesen Mähdreschern wird die Lage der Gutverteiler 12,13 an die Hangneigung angepasst, so dass die Gutverteiler 12,13 und der Feldboden eine annähernd parallele Lage zueinander einnehmen. Bei der in der Fig. 5 dargestellten Ausführung erfolgt dies dadurch, dass die beiden Gutverteiler 12,13 an einem Tragrahmen 33 angeordnet sind, der um eine gemeinsame, in Fahrtrichtung F verlaufende horizontale Achse 34 schwenkbar ist. Die jeweilige Schwenkbewegung erfolgt durch einen Hydraulikzylinder 35, der in vertikaler Richtung zwischen dem Rahmen 20 des Strohhäckslers 11 und dem Tragrahmen 33 der Gutverteiler 12,13 angeordnet ist. Der Hydraulikzylinder 35 wird von einer Steuerungseinrichtung 36 entsprechend den Signalen eines Sensors 37 betätigt und somit eine Paralleistellung der Gutverteiler 12,13 zum Feldboden bewirkt. Dadurch wird eine gleichmäßige Häckselgutverteilung über die gesamte Schnittbreite des Mähdreschers 1 erreicht.

Bei der Ausführung nach der Fig. 6 sind die beiden Gutverteiler 12,13 voneinander getrennt um je eine zugehörige, in Fahrtrichtung F verlaufende Achse 38,39 in eine zur Hangneigung des Feldes parallel verlaufende Lage verschwenkbar. Die Schwenkbewegung der Gutverteiler 12,13 erfolgt in analoger Weise wie bei der in der Fig. 5 beschriebenen Ausführung.

Bei allen vorstehend beschriebenen Ausführungen können entsprechend der jeweiligen Leistungsklasse und Schneidwerksbreite des Mähdreschers dem Strohhäcksler 11 ein - oder mehrere - Gutverteiler 12,13 zugeordnet werden.

### Bezugszeichen

- 1 -: Mähdrescher
- 2 -: Achsträger
- 3 -: Sensor
- 4 -: Hydraulikzylinder
- 5 -: Rahmen
- 8 -: Drescheinrichtung
- 7 -: Strohschüttler
- 8 -: Reinigungssiebe
- 9 -: Korntank
- 10 -: Strohausfallhaube
- 11 -: Strohhäcksler
- 12,13-: Gutverteiler
- 14 -: Schwenkachse
- 15 -: Sensor
- 16 -: Regelungseinrichtung
- 17 -: Schwenkachse
- 18 -: Sensor
- 19 -: Hydraulikzylinder
- 20 -: Rahmen
- 21 -: Schneidwerk
- 22 -: Fahrerkabine
- 23 -: Vorderräder
- 24 -: Hinterräder
- 25 -: Leitprofil
- 28 -: Hydraulikzylinder
- 27 -: Sensor
- 28 -: Steuerungseinrichtung
- 29 -: Siebsteuerung
- 30 -: Leitprofil
- 31 -: Achse
- 32 -: Hydraulikzylinder
- 33 -: Tragrahmen
- 34 -: Achse
- 35 -: Hydraulikzylinder
- 36 -: Steuerungseirnichtung
- 37-: Sensor
- 38,39 -: Achse

- A: Pfeilrichtung
- F -: Fahrtrichtung

## Patentansprüche

1. Verfahren zum Zerkleinern und Verteilen von Erntegut, für einen Strohhäcksler mit zugeordneten Gutverteilern an einem Mähdrescher, wobei der Strohhäcksler und die Gutverteiler im Bereich der Strohausfallhaube unterhalb der Abgabestelle der Strohschüttler oder einer rotierenden Strohtrenneinrichtung quer zur Fahrtrichtung angeordnet sind,
**dadurch gekennzeichnet,**
**dass** die Erntegutzufuhr zum Strohhäcksler (11) und die Erntegutzufuhr zu den Gutverteilern (12,13) mittels verschwenkbarer Verteilelemente (30) zwischen Strohhäcksler (11) und den Gutvertellern (12, 13) sowie die Gutabgabe und die Lage des Strohhäckslers (11) in Abhängigkeit von der Neigung des Feldbodens änderbar ist.

2. Vorrichtung zum Zerkleinern und Verteilen von Erntegut, für einen Strohhäcksler mit zugeordneten Gutverteilern an einem Mähdrescher, wobei der Strohhäcksler und die Gutverteiler im Bereich der Strohausfallhaube unterhalb der Abgabestelle der Strohschüttler oder einer rotierenden Strohtrenneinrichtung quer zur Fahrtrichtung angeordnet sind,
**dadurch gekennzeichnet,**
**dass** der Strohhäcksler (11) und die Gutverteiler (12, 13) mit einer Steuerungseinrichtung zur hangneigungsabhängigen Lageänderung versehen sind und wobei die Erntegutzufuhr zu den Gutverteilern (12,13) mittels verschwenkbarer Verteilelemente (30) zwischen Strohäcksler (11) und den Gutverteilern (12,13) in Abhängigkeit von der Neigung des Feldbodens änderbar ist.

3. Vorrichtung zum Zerkleinern und Verteilen von Erntegut nach Anspruch 2,
**dadurch gekennzeichnet,**
**dass** die Steuereinrichtung elektro-hydraulisch arbeitet und dem Strohhäcksler (11) und den Gutverteilern (12. 13) eine gemeinsame oder getrennte Steuereinrichtungen zugeordnet sind.

4. Vorrichtung zum Zerkleinern und Verteilen von Erntegut nach einem der Ansprüche 2 bis 3,
**dadurch gekennzeichnet,**
**dass** der Strohhäcksler (11) und die Gutverteiler (12,13) um eine gemeinsame, in Fahrtrichtung (F) verlaufende Schwenkachse (14) schwenkbar sind.

5. Vorrichtung zum Zerkleinern und Verteilen von Erntegut nach einem der Ansprüche 2 bis 4,
**dadurch gekennzeichnet,**
**dass** im Bereich der Schwenkachse (14) ein Sensor (15) zur Erfassung der Schrägstellung des Strohhäckslers 11 angeordnet ist, dessen Stellsignale einer Regelungseinrichtung (16) zuführbar sind.

6. Vorrichtung zum Zerkleinern und Verteilen von Erntegut nach einem der Ansprüche 2 bis 5,
**dadurch gekennzeichnet,**
**dass** im Bereich der quer zur Fahrtrichtung (F) verlaufenden Schwenkachse (17) der Gutverteiler (12,13) ein Sensor (18) zur Erfassung der Neigung der Gutverteiler (12,13) zum Feldboden angeordnet ist, dessen Stellsignale zumindest einen Hydraulikzylinder (19) zur Neigungseinstellung der Gutverteiler (12,13) betätigen.

7. Vorrichtung zum Zerkleinern und Verteilen von Erntegut nach einem der Ansprüche 2 bis 6,
**dadurch gekennzeichnet,**
**dass** zwei nebeneinander angeordnete Gutverteiler (12,13) in Abhängigkeit von der Hangneigung quer zur Fahrtrichtung (F) geradlinig verstellbar angeordnet sind.

8. Vorrichtung zum Zerkleinern und Verteilen von Erntegut nach Anspruch 7,
**dadurch gekennzeichnet,**
**dass** die Gutverteiler (12,13) durch zumindest einen Hydraulikzylinder (26) verstellbar.sind der über einen Sensor (27) und eine separate Steuerungseinrichtung (28) oder durch eine mit einer hangabhängigen Siebsteuerung (29) der Reinigungssiebe (8) in Verbindung stehenden Einrichtung betätigbar ist.

9. Vorrichtung zum Zerkleinern und Verteilen von Erntegut nach einem der Ansprüche 2 bis 8,
**dadurch gekennzeichnet,**
**dass** zwischen zwei nebeneinander angeordneten Gutverteilern (12,13) ein schwenkbares Leitprofil (30) angeordnet ist, das um eine vertikal verlaufende Achse (31) schwenkbar ist.

10. Vorrichtung zum Zerkleinern und Verteilen von Erntegut nach Anspruch 9,
**dadurch gekennzeichnet,**
**dass** das Leitprofil (30) durch einen Hydraulikzylinder (32) schwenkbar ist, der von einer hangabhängigen Siebsteuerung (29) der Reinigungssiebe (8) oder durch eine separate neigungsabhängige Stelleinrichtung betätigbar ist.

11. Vorrichtung zum Zerkleinern und Verteilen von Erntegut nach einem der Ansprüche 2 bis 10,
**dadurch gekennzeichnet,**
**dass** die Gutverteiler (12,13) an einem Tragrahmen (33) angeordnet sind, der um eine gemeinsame, in Fahrtrichtung (F) verlaufende horizontale Achse (34) schwenkbar ist.

12. Vorrichtung zum Zerkleinern und Verteilen von Erntegut nach Anspruch 11,
**dadurch gekennzeichnet,**
**dass** der Tragrahmen (33) durch einen Hydraulikzylinder (35) schwenkbar ist, der von einer Steuerungseinrichtung (36) entsprechend den Signalen eines Sensors (37) betätigbar ist.

13. Vorrichtung zum Zerkleinern und Verteilen von Erntegut nach einem der Ansprüche 2 bis 11,
**dadurch gekennzeichnet,**
**dass** die Gutverteiler (12,13) voneinander getrennt um je eine zugehörige, in Fahrtrichtung (F) verlaufende Achse (38,39) schwenkbar sind.

## Claims

1. A method of comminuting and distributing crop material for a straw chopper with associated material distributors on a combine harvester, wherein the straw chopper and the material distributors are arranged in the region of the straw discharge hood beneath the delivery location of the straw walkers or a rotating straw separating device transversely with respect to the direction of travel,
**characterised in that**
by means of pivotable distributor elements (30) between the straw chopper (11) and the material distributors (12, 13) the crop material feed to the straw chopper (11) and the crop material feed to the material distributors (12, 13) as well as the material delivery and the position of the straw chopper (11) is variable in dependence on the inclination of the ground.

2. Apparatus for comminuting and distributing crop material for a straw chopper with associated material distributors on a combine harvester, wherein the straw chopper and the material distributors are arranged in the region of the straw discharge hood beneath the delivery location of the straw walkers or a rotating straw separating device transversely with respect to the direction of travel,
**characterised in that**
the straw chopper (11) and the material distributors (12, 13) are provided with a control device for changing position in dependence on slope inclination and wherein the crop material feed to the material distributors (12, 13) is variable by means of pivotable distributor elements (30) between the straw chopper (11) and the material distributors (12, 13) in dependence on the inclination of the ground.

3. Apparatus for comminuting and distributing crop material according to claim 2 **characterised in that** the control device operates electro-hydraulically and a common or separate control devices are associated with the straw chopper (11) and the material distributors (12, 13).

4. Apparatus for comminuting and distributing crop material according to one of claims 2 and 3 **characterised in that** the straw chopper (11) and the material distributors (12, 13) are pivotable about a common pivot axis (14) extending in the direction of travel (F).

5. Apparatus for comminuting and distributing crop material according to one of claims 2 to 4 **characterised in that** arranged in the region of the pivot axis (14) is a sensor (15) for detecting the inclined position of the straw chopper (11), the adjusting signals of which sensor can be fed to a regulating device (16).

6. Apparatus for comminuting and distributing crop material according to one of claims 2 to 5 **characterised in that** arranged in the region of the pivot axis (17) of the material distributors (12, 13), which extends transversely with respect to the direction of travel (F), is a sensor (18) for detecting the inclination of the material distributors (12, 13) with respect to the ground, the adjusting signals of which sensor actuate at least one hydraulic cylinder (19) for inclination adjustment of the material distributors (12, 13).

7. Apparatus for comminuting and distributing crop material according to one of claims 2 to 6 **characterised in that** two mutually juxtaposed material distributors (12, 13) are arranged adjustably in a straight line in dependence on the inclination of slope transversely with respect to the direction of travel (F).

8. Apparatus for comminuting and distributing crop material according to claim 7 **characterised in that** the material distributors (12, 13) are displaceable by at least one hydraulic cylinder (26) which is actuable by way of a sensor (27) and a separate control device (28) or by a device which is connected to a slope-dependent sieve control (29) of the cleaning sieve (8).

9. Apparatus for comminuting and distributing crop material according to one of claims 2 to 8 **characterised in that** arranged between two mutually juxtaposed material distributors (12, 13) is a pivotable guide profile member (30) which is pivotable about a vertically extending axis (31).

10. Apparatus for comminuting and distributing crop material according to claim 9 **characterised in that** the guide profile member (30) is pivotable by a hydraulic cylinder (32) which is actuable by a slope-dependent sieve control (29) of the cleaning sieve (8) or by a separate inclination-dependent adjusting device.

11. Apparatus for comminuting and distributing crop material according to one of claims 2 to 10 **characterised in that** the material distributors (12, 13) are arranged on a support frame (33) pivotable about a common horizontal axis (34) which extends in the direction of travel (F).

12. Apparatus for comminuting and distributing crop material according to claim 11 **characterised in that** the support frame (33) is pivotable by a hydraulic cylinder (35) which is actuable by a control device (36) in accordance with the signals of a sensor (37).

13. Apparatus for comminuting and distributing crop material according to one of claims 2 to 11 **characterised in that** the material distributors (12, 13) are pivotable separately from each other about a respective associated axis (38, 39) extending in the direction of travel (F).

## Revendications

1. Procédé de broyage et d'éparpillement de produits de récolte pour un hache-paille avec des éparpilleurs associés dans une moissonneuse-batteuse, le hache-paille et les éparpilleurs étant disposés transversalement à la direction de déplacement dans la région de la hotte arrière, en-dessous de la sortie des secoueurs de paille ou d'un séparateur de paille rotatif, **caractérisé par le fait que** l'entrée de produit de récolte dans le hache-paille (11) et l'entrée de produit de récolte dans les éparpilleurs (12, 13) peuvent être modifiées en fonction de la pente du sol du champ au moyen d'éléments déflecteurs (30) orientables placés entre le hache-paille (11) et les éparpilleurs (12, 13) de même que la sortie de produit de récolte et la position du hache-paille (11).

2. Dispositif de broyage et d'éparpillement de produits de récolte pour un hache-paille avec des éparpilleurs associés dans une moissonneuse-batteuse, le hache-paille et les éparpilleurs étant disposés transversalement à la direction de déplacement dans la région de la hotte arrière en-dessous de la sortie des secoueurs de paille ou d'un séparateur de paille rotatif, **caractérisé par le fait que** le hache-paille (11) et les éparpilleurs (12, 13) sont équipés d'un dispositif de commande permettant de modifier la position en fonction de la déclivité du sol, l'entrée de produit de récolte dans les éparpilleurs (12, 13) pouvant être modifiée en fonction de la pente du sol du champ au moyen d'éléments déflecteurs (30) orientables placés entre le hache-paille (11) et les éparpilleurs (12, 13).

3. Dispositif de broyage et d'éparpillement de produits de récolte selon la revendication 2, **caractérisé par le fait que** le dispositif de commande est du type électro-hydraulique et qu'un dispositif de commande commun ou des dispositifs de commande distincts est/sont associé(s) au hache-paille (11) et aux éparpilleurs (12, 13).

4. Dispositif de broyage et d'éparpillement de produits de récolte selon une des revendications 2 à 3, **caractérisé par le fait que** le hache-paille (11) et les éparpilleurs (12, 13) peuvent pivoter autour d'un axe de pivotement (14) commun qui s'étend dans la direction de déplacement (F).

5. Dispositif de broyage et d'éparpillement de produits de récolte selon une des revendications 2 à 4, **caractérisé par le fait que** dans la région de l'axe de pivotement (14) est disposé un capteur (15) de mesure de l'inclinaison du hache-paille (11), dont les signaux de réglage peuvent être transmis à un dispositif de réglage (16).

6. Dispositif de broyage et d'éparpillement de produits de récolte selon une des revendications 2 à 5, **caractérisé par le fait que** dans la région de l'axe de pivotement (17) des éparpilleurs (12, 13), qui s'étend transversalement à la direction de déplacement (F), est disposé un capteur (18) de mesure de l'inclinaison des éparpilleurs (12, 13) par rapport au sol du champ, dont les signaux de réglage actionnent au moins un vérin hydraulique (19) pour le réglage de l'inclinaison des éparpilleurs (12, 13).

7. Dispositif de broyage et d'éparpillement de produits de récolte selon une des revendications 2 à 6, **caractérisé par le fait que** deux éparpilleurs (12, 13) sont disposés côte à côte avec possibilité de déplacement rectiligne en fonction de la pente transversalement à la direction de déplacement (F).

8. Dispositif de broyage et d'éparpillement de produits de récolte selon une des revendications 2 à 7, **caractérisé par le fait que** les éparpilleurs (12, 13) peuvent être déplacés à l'aide d'au moins un vérin hydraulique (26) qui est actionné par l'intermédiaire d'un capteur (27) et d'un dispositif de commande (28) séparé ou par un dispositif connecté à une commande de tamis (29) asservie à la pente des tamis de nettoyage (8).

9. Dispositif de broyage et d'éparpillement de produits de récolte selon une des revendications 2 à 8, **caractérisé par le fait qu'**entre deux éparpilleurs (12, 13) disposés côte à côte est placé un déflecteur (30) orientable qui peut pivoter autour d'un axe (31) vertical.

10. Dispositif de broyage et d'éparpillement de produits de récolte selon la revendication 9, **caractérisé par le fait que** le déflecteur (30) peut pivoter sous l'action d'un vérin hydraulique (32) qui est actionné par l'intermédiaire d'un dispositif de commande (29) des tamis de nettoyage (8) asservi à la pente ou par un dispositif de réglage asservi à la déclivité séparé.

11. Dispositif de broyage et d'éparpillement de produits de récolte selon une des revendications 2 à 10, **caractérisé par le fait que** les éparpilleurs (12, 13) sont montés sur un cadre-support (33) qui peut pivoter autour d'un axe (34) horizontal commun s'étendant dans la direction de déplacement (F).

12. Dispositif de broyage et d'éparpillement de produits de récolte selon la revendication 11, **caractérisé par le fait que** le cadre-support (33) peut pivoter sous l'action d'un vérin hydraulique (35) qui est actionné par un dispositif de commande (36) en fonction des signaux d'un capteur (37)

13. Dispositif de broyage et d'éparpillement de produits de récolte selon une des revendications 2 à 11, **caractérisé par le fait que** les éparpilleurs (12, 13) peuvent pivoter indépendamment l'un de l'autre, chacun autour d'un axe (38, 39) propre qui s'étend dans la direction de déplacement (F).
